# EUROPEAN PATENT APPLICATION

(11) **EP 4 297 466 A1**
(43) Date of publication of application: **27.12.2023**
(21) Application number: 22770426.9
(22) Date of filing: 14.03.2022
(51) Int. Cl.: H04W 24/02, H04W 72/04, H04L 5/00

(54) **COMMUNICATION METHOD AND APPARATUS**

(30) Priority: 15.03.2021 CN 202110276559
(71) Applicant: Huawei Technologies Co., Ltd., Shenzhen, Guangdong 518129 (CN)
(72) Inventor: HOU, Hailong, Shenzhen, Guangdong 518129 (CN); JIN, Zhe, Shenzhen, Guangdong 518129 (CN); LUO, Zhihu, Shenzhen, Guangdong 518129 (CN); QU, Weilin, Shenzhen, Guangdong 518129 (CN)
(74) Representative: Epping - Hermann - Fischer
(86) International application number: PCT/CN2022/080555
(87) International publication number: WO 2022/194071

(57) **Abstract**

This application provides a resource block configuration method and a communication apparatus. The method includes: receiving first configuration information, where the first configuration information is used to configure a first uplink BWP and a second uplink BWP, there is no first uplink control channel resource in the first uplink BWP, there is a first uplink control channel resource in the second uplink BWP, and the first uplink BWP and the second uplink BWP are on a same uplink carrier; determining the first uplink BWP and the second uplink BWP based on the first configuration information; determining that the first uplink BWP is an active BWP; and switching from the first uplink BWP to the second uplink BWP and sending uplink control information. According to the resource block configuration method in embodiments of this application, overheads of an uplink control channel resource can be reduced, transmission efficiency of a terminal device can be improved, and a resource fragmentation problem is avoided.

## Description

This application claims priority to Chinese Patent Application No. 202110276559.7, filed with the China National Intellectual Property Administration on March 15, 2021 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

In a conventional technology, an uplink control channel (physical uplink control channel, PUCCH) resource is configured in an uplink BWP for transmission. In addition, a PUCCH resource needsA to be configured in each BWP. With emergence of a machine-type terminal, a requirement on costs and power consumption is higher, and initial access bandwidth of the machine-type terminal is small. Therefore, initial uplink BWP bandwidth used in an initial access phase is small. Particularly, for a time division duplex system, both an initial uplink BWP and an initial downlink BWP are limited to be near a synchronization broadcast block (SS/PUCH block, SSB). In this case, if a PUCCH resource is configured in each BWP, PUCCH resource overheads are large, an uplink resource is fragmented, and flexibility of resource allocation is limited. Consequently, resource utilization of a network and transmission efficiency of the terminal are affected.

### SUMMARY

This application provides a communication method and a communication apparatus, to reduce overheads of an uplink control channel resource, avoid uplink resource fragmentation, and improve transmission efficiency of a terminal device.

According to a first aspect, a communication method is provided, including: receiving first configuration information from a network device, where the first configuration information is used to configure a first uplink BWP and a second uplink BWP, there is no first uplink control channel resource in the first uplink BWP, there is a first uplink control channel resource in the second uplink BWP, and the first uplink BWP and the second uplink BWP are on a same uplink carrier; and determining the first uplink BWP and the second uplink BWP based on the first configuration information.

According to the communication method provided in this application, the first uplink BWP in which there is no first uplink control channel resource and the second uplink BWP in which there is the first uplink control channel resource are configured on the same uplink carrier, so that a problem of excessively high overheads of an uplink control channel resource caused by configuration of an uplink control channel resource in all BWPs of the same uplink carrier is avoided, the overheads of the uplink control channel resource are reduced, and uplink resource fragmentation caused by the uplink control channel resource can be avoided, thereby providing more transmission resources for a terminal device, and improving transmission efficiency of the terminal device.

Optionally, that there is no first uplink control channel resource in the first uplink BWP is that there is no first uplink control channel resource in a frequency range of the first uplink BWP. Optionally, that there is no first uplink control channel resource in the first uplink BWP is that there is the first uplink control channel resource in a frequency range of the first uplink BWP, and an activation status of the first uplink control channel resource is an inactive state.

Optionally, that there is a first uplink control channel resource in the second uplink BWP is that there is the first uplink control channel resource in a frequency range of the second uplink BWP. Optionally, that there is a first uplink control channel resource in the second uplink BWP is that there is the first uplink control channel resource in a frequency range of the second uplink BWP, and an activation status of the first uplink control channel resource is an active state.

Optionally, the network device configures the activation status of the first uplink control channel resource by using signaling, and dynamically configures the activation status of the first uplink control channel resource, so that the uplink control channel resource is configured more flexibly, thereby reducing the overheads of the uplink control channel resource and improving the transmission efficiency of the terminal device.

With reference to the first aspect, in some implementations of the first aspect, the terminal device determines that the first uplink BWP is an active BWP; and the terminal device switches from the first uplink BWP to the second uplink BWP, and sends uplink control information on the first uplink control channel resource of the second uplink BWP.

Optionally, the terminal device determines, according to a first rule or based on first indication information, to switch from the first uplink BWP to the second uplink BWP, where the first rule or the first indication information indicates to switch from the first uplink BWP to the second uplink BWP when the terminal device determines that the uplink control information needs to be sent, where the first rule is predefined, and the first indication information is from the network device.

With reference to the first aspect, in some implementations of the first aspect, the terminal device determines that the sending of the uplink control information is completed, and switches from the second uplink BWP to the first uplink BWP.

Optionally, the terminal device determines, according to a second rule or based on second indication information, to switch from the second uplink BWP to the first uplink BWP, where the second rule or the second indication information indicates to switch from the second uplink BWP to the first uplink BWP when the terminal device determines that the sending of the uplink control information is completed, where
the second rule is predefined, and the second indication information is from the network device.

Optionally, the first indication information and the second indication information are a same message.

With reference to the first aspect, in some implementations of the first aspect, the second uplink BWP is located on either of two sides of bandwidth of the uplink carrier. In other words, the first uplink control channel resource is located on either of the two sides of the bandwidth of the uplink carrier, so that a resource fragmentation problem caused when the uplink control channel resource is located in the middle of the bandwidth of the uplink carrier is avoided.

According to a second aspect, a communication method is provided, including: receiving second configuration information from a network device, where the second configuration information is used to configure a first uplink frequency resource block and a second uplink frequency resource block, there is no second uplink control channel resource in the first uplink frequency resource block, there is a second uplink control channel resource in the second uplink frequency resource block, a BWP index of the first uplink frequency resource block is the same as a BWP index of the second uplink frequency resource block, and the first uplink frequency resource block and the second uplink frequency resource block are on a same uplink carrier; and determining the first uplink frequency resource block and the second uplink frequency resource block based on the second configuration information.

According to the communication method provided in this application, the first uplink frequency resource block in which there is no second uplink control channel resource and the second uplink frequency resource block in which there is the second uplink control channel resource are configured on the same uplink carrier, so that a problem of excessively high overheads of an uplink control channel resource caused by configuration of an uplink control channel resource in all frequency resource blocks of the same uplink carrier is avoided, the overheads of the uplink control channel resource are reduced, and uplink resource fragmentation caused by the uplink control channel resource can be avoided, thereby providing more transmission resources for a terminal device, and improving transmission efficiency of the terminal device. In addition, the BWP index of the first uplink frequency resource block is the same as the BWP index of the second uplink frequency resource block. It may be considered that the first uplink frequency resource block and the second uplink frequency resource block belong to a same BWP, and RRC parameters configured on the two are completely the same or partially the same. In this way, a problem that the transmission efficiency of the terminal device is reduced and that is caused by high complexity and long time consumption of BWP switching is avoided.

Optionally, that there is no second uplink control channel resource in the first uplink frequency resource block is that there is no first uplink control channel resource in a frequency range of the first uplink frequency resource block.

Optionally, that there is no second uplink control channel resource in the first uplink frequency resource block is that there is the first uplink control channel resource in a frequency range of the first uplink frequency resource block, and an activation status of the first uplink control channel resource is an inactive state.

Optionally, that there is a second uplink control channel resource in the second uplink frequency resource block is that there is the first uplink control channel resource in a frequency range of the second uplink frequency resource block.

Optionally, that there is a second uplink control channel resource in the second uplink frequency resource block is that there is the first uplink control channel resource in a frequency range of the second uplink frequency resource block, and an activation status of the second uplink control channel resource is an active state.

Optionally, the network device configures the activation status of the second uplink control channel resource by using signaling, and dynamically configures the activation status of the first uplink control channel resource, so that the uplink control channel resource is configured more flexibly, thereby reducing the overheads of the uplink control channel resource and improving the transmission efficiency of the terminal device.

With reference to the second aspect, in some implementations of the second aspect, the terminal device determines that the first uplink frequency resource block is an active frequency resource block; and the terminal device switches from the first uplink frequency resource block to the second uplink frequency resource block, and sends uplink control information on the second uplink control channel resource of the second uplink frequency resource block.

Optionally, the terminal device determines, according to a third rule or based on third indication information, to switch from the first uplink frequency resource block to the second uplink frequency resource block, where the third rule or the third indication information indicates to switch from the first uplink frequency resource block to the second uplink frequency resource block when the terminal device determines that the uplink control information needs to be sent, where the third rule is predefined, and the third indication information is from the network device. With reference to the second aspect, in some implementations of the second aspect, the terminal device determines that the sending of the uplink control information is completed, and switches from the second uplink frequency resource block to the first uplink frequency resource block.

Optionally, the terminal device determines, according to a fourth rule or fourth indication information, to switch from the second uplink frequency resource block to the first uplink frequency resource block, where the fourth rule or the fourth indication information indicates to switch from the second uplink frequency resource block to the first uplink frequency resource block when the terminal device determines that the sending of the uplink control information is completed, where
the fourth rule is predefined, and the fourth indication information is from the network device.

Optionally, the third indication information and the fourth indication information are a same message.

With reference to the second aspect, in some implementations of the second aspect, the second uplink frequency resource block is located on either of two sides of bandwidth of the uplink carrier. In other words, the second uplink control channel resource is located on either of the two sides of the bandwidth of the uplink carrier, so that a resource fragmentation problem caused when the uplink control channel resource is located in the middle of the bandwidth of the uplink carrier is avoided.

According to a third aspect, a communication method is provided, including: receiving third configuration information from a network device, where the third configuration information is used to configure a third uplink BWP, there is no fourth uplink control channel resource in the third uplink BWP, the configuration information of the third uplink BWP includes configuration information of at least one third uplink control channel resource, a frequency position of the third uplink control channel resource may be outside a frequency range of the third uplink BWP, and the third uplink BWP and the third uplink control channel resource are on a same uplink carrier; and determining the third uplink BWP and the at least one third uplink control channel resource based on the third configuration information.

According to the communication method provided in this application, the third uplink BWP in which there is no fourth uplink control channel resource and the third control channel resource that is associated with the third uplink BWP and that is outside the frequency range of the third uplink BWP are configured on the same uplink carrier, so that a problem of excessively high overheads of an uplink control channel resource caused by configuration of an uplink control channel resource in frequency ranges of all BWPs of the same uplink carrier is avoided, the overheads of the uplink control channel resource are reduced, and uplink resource fragmentation caused by the uplink control channel resource can be avoided, thereby providing more transmission resources for a terminal device, and improving transmission efficiency of the terminal device.

Optionally, that there is no fourth uplink control channel resource in the third uplink BWP is that there is no fourth uplink control channel resource in the frequency range of the third uplink BWP. Optionally, that there is no fourth uplink control channel resource in the third uplink BWP is that there is the fourth uplink control channel resource in the frequency range of the third uplink BWP, and an activation status of the fourth uplink control channel resource is an inactive state.

Optionally, an activation status of the third uplink control channel resource is an active state.

Optionally, the network device configures the activation status of the third uplink control channel resource and the activation status of the fourth uplink control channel resource by using signaling, and dynamically configures the activation status of the uplink control channel resource, so that the uplink control channel resource is configured more flexibly, thereby reducing the overheads of the uplink control channel resource and improving the transmission efficiency of the terminal device. With reference to the third aspect, in some implementations of the third aspect, the terminal device determines that the third uplink BWP is an active BWP; and the terminal device switches from the third uplink BWP to the frequency position of the third uplink control channel resource, and sends uplink control information on the third uplink control channel resource.

Optionally, the terminal device determines, according to a fifth rule or based on fifth indication information, to switch from the third uplink BWP to the frequency position of the third uplink control channel resource, where the fifth rule or the fifth indication information indicates to switch from the first uplink BWP to the frequency position of the third uplink control channel resource when the terminal device determines that the uplink control information needs to be sent, where the fifth rule is predefined, and the fifth indication information is from the network device.

With reference to the third aspect, in some implementations of the third aspect, the terminal device determines that the sending of the uplink control information is completed, and switches from the frequency position of the third uplink control channel resource to the third uplink BWP.

Optionally, the terminal device determines, according to a sixth rule or based on sixth indication information, to switch from the frequency position of the third uplink control channel resource to the third uplink BWP, where the sixth rule or the sixth indication information indicates to switch from the frequency position of the third uplink control channel resource to the third uplink BWP when the terminal device determines that the sending of the uplink control information is completed, where
the sixth rule is predefined, and the sixth indication information is from the network device.

Optionally, the fifth indication information and the sixth indication information are a same message.

With reference to the third aspect, in some implementations of the third aspect, the third control channel resource is located on either of two sides of bandwidth of the uplink carrier, so that a resource fragmentation problem caused when the uplink control channel resource is located in the middle of the bandwidth of the uplink carrier is avoided.

According to a fourth aspect, a communication method is provided, including: determining first configuration information; and sending the first configuration information to a terminal device, where the first configuration information is used to configure a first uplink BWP and a second uplink BWP, there is no first uplink control channel resource in the first uplink BWP, there is a first uplink control channel resource in the second uplink BWP, and the first uplink BWP and the second uplink BWP are on a same uplink carrier.

According to the communication method provided in this application, the first uplink BWP in which there is no first uplink control channel resource and the second uplink BWP in which there is the first uplink control channel resource are configured on the same uplink carrier, so that a problem of excessively high overheads of an uplink control channel resource caused by configuration of an uplink control channel resource in all BWPs of the same uplink carrier is avoided, the overheads of the uplink control channel resource are reduced, and uplink resource fragmentation caused by the uplink control channel resource can be avoided, thereby providing more transmission resources for a terminal device, and improving transmission efficiency of the terminal device.

Optionally, that there is no first uplink control channel resource in the first uplink BWP is that there is no first uplink control channel resource in a frequency range of the first uplink BWP.

Optionally, that there is no first uplink control channel resource in the first uplink BWP is that there is the first uplink control channel resource in a frequency range of the first uplink BWP, and an activation status of the first uplink control channel resource is an inactive state.

Optionally, that there is a first uplink control channel resource in the second uplink BWP is that there is the first uplink control channel resource in a frequency range of the second uplink BWP. Optionally, that there is a first uplink control channel resource in the second uplink BWP is that there is the first uplink control channel resource in a frequency range of the second uplink BWP, and an activation status of the first uplink control channel resource is an active state.

Optionally, the network device configures the activation status of the first uplink control channel resource by using signaling, and dynamically configures the activation status of the first uplink control channel resource, so that the uplink control channel resource is configured more flexibly, thereby reducing the overheads of the uplink control channel resource and improving the transmission efficiency of the terminal device.

With reference to the fourth aspect, in some implementations of the fourth aspect, the network device sends first indication information to the terminal device, where the first indication information indicates to switch from the first uplink BWP to the second uplink BWP when the terminal device determines that uplink control information needs to be sent.

With reference to the fourth aspect, in some implementations of the fourth aspect, the network device sends first indication information to the terminal device, where the first indication information indicates to switch from the first uplink BWP to the second uplink BWP when the terminal device determines that uplink control information needs to be sent.

Optionally, the first indication information and the second indication information are a same message.

With reference to the fourth aspect, in some implementations of the fourth aspect, the second uplink BWP is located on either of two sides of bandwidth of the uplink carrier. In other words, the first uplink control channel resource is located on either of the two sides of the bandwidth of the uplink carrier, so that a resource fragmentation problem caused when the uplink control channel resource is located in the middle of the bandwidth of the uplink carrier is avoided.

According to a fifth aspect, a communication method is provided, including: determining second configuration information; and sending, by a terminal device, the second configuration information, where the second configuration information is used to configure a first uplink frequency resource block and a second uplink frequency resource block, there is no second uplink control channel resource in the first uplink frequency resource block, there is a second uplink control channel resource in the second uplink frequency resource block, a BWP index of the first uplink frequency resource block is the same as a BWP index of the second uplink frequency resource block, and the first uplink frequency resource block and the second uplink frequency resource block are on a same uplink carrier.

According to the communication method provided in this application, the first uplink frequency resource block in which there is no second uplink control channel resource and the second uplink frequency resource block in which there is the second uplink control channel resource are configured on the same uplink carrier, so that a problem of excessively high overheads of an uplink control channel resource caused by configuration of an uplink control channel resource in all frequency resource blocks of the same uplink carrier is avoided, the overheads of the uplink control channel resource are reduced, and uplink resource fragmentation caused by the uplink control channel resource can be avoided, thereby providing more transmission resources for a terminal device, and improving transmission efficiency of the terminal device. In addition, the BWP index of the first uplink frequency resource block is the same as the BWP index of the second uplink frequency resource block. It may be considered that the first uplink frequency resource block and the second uplink frequency resource block belong to a same BWP, and RRC parameters configured on the two are completely the same or partially the same. In this way, a problem that the transmission efficiency of the terminal device is reduced and that is caused by high complexity and long time consumption of BWP switching is avoided.

Optionally, that there is no second uplink control channel resource in the first uplink frequency resource block is that there is no first uplink control channel resource in a frequency range of the first uplink frequency resource block.

Optionally, that there is no second uplink control channel resource in the first uplink frequency resource block is that there is the first uplink control channel resource in a frequency range of the first uplink frequency resource block, and an activation status of the first uplink control channel resource is an inactive state.

Optionally, that there is a second uplink control channel resource in the second uplink frequency resource block is that there is the first uplink control channel resource in a frequency range of the second uplink frequency resource block.

Optionally, that there is a second uplink control channel resource in the second uplink frequency resource block is that there is the first uplink control channel resource in a frequency range of the second uplink frequency resource block, and an activation status of the second uplink control channel resource is an active state.

Optionally, the network device configures the activation status of the second uplink control channel resource by using signaling, and dynamically configures the activation status of the first uplink control channel resource, so that the uplink control channel resource is configured more flexibly, thereby reducing the overheads of the uplink control channel resource and improving the transmission efficiency of the terminal device.

With reference to the fifth aspect, in some implementations of the fifth aspect, the network device sends third indication information to the terminal device, where the third indication information indicates to switch from the first uplink frequency resource block to the second uplink frequency resource block when the terminal device determines that uplink control information needs to be sent.

With reference to the fifth aspect, in some implementations of the fifth aspect, the network device sends fourth indication information to the terminal device, where the fourth indication information indicates to switch from the second uplink frequency resource block to the first uplink frequency resource block when the terminal device determines that the sending of the uplink control information is completed.

Optionally, the third indication information and the fourth indication information are a same message.

With reference to the fifth aspect, in some implementations of the fifth aspect, the second uplink frequency resource block is located on either of two sides of bandwidth of the uplink carrier. In other words, the second uplink control channel resource is located on either of the two sides of the bandwidth of the uplink carrier, so that a resource fragmentation problem caused when the uplink control channel resource is located in the middle of the bandwidth of the uplink carrier is avoided. According to a sixth aspect, a communication method is provided, including: determining third configuration information; and sending the third configuration information, where the third configuration information is used to configure a third uplink BWP, there is no fourth uplink control channel resource in the third uplink BWP, the configuration information of the third uplink BWP includes configuration information of at least one third uplink control channel resource, and a frequency position of the third uplink control channel resource is outside a frequency range of the third uplink BWP.

According to the communication method provided in this application, the third uplink BWP in which there is no fourth uplink control channel resource and the third control channel resource that is associated with the third uplink BWP and that is outside the frequency range of the third uplink BWP are configured on the same uplink carrier, so that a problem of excessively high overheads of an uplink control channel resource caused by configuration of an uplink control channel resource in all BWPs of the same uplink carrier is avoided, the overheads of the uplink control channel resource are reduced, and uplink resource fragmentation caused by the uplink control channel resource can be avoided, thereby providing more transmission resources for a terminal device, and improving transmission efficiency of the terminal device.

Optionally, that there is no fourth uplink control channel resource in the third uplink BWP is that there is no fourth uplink control channel resource in the frequency range of the third uplink BWP. Optionally, that there is no fourth uplink control channel resource in the third uplink BWP is that there is the fourth uplink control channel resource in the frequency range of the third uplink BWP, and an activation status of the fourth uplink control channel resource is an inactive state.

Optionally, an activation status of the third uplink control channel resource is an active state.

Optionally, the network device configures the activation status of the third uplink control channel resource and the activation status of the fourth uplink control channel resource by using signaling, and dynamically configures the activation status of the uplink control channel resource, so that the uplink control channel resource is configured more flexibly, thereby reducing the overheads of the uplink control channel resource and improving the transmission efficiency of the terminal device. With reference to the sixth aspect, in a possible implementation of the sixth aspect, the network device sends fifth indication information to the terminal device, where the fifth indication information indicates to switch from the third uplink BWP to the frequency position of the third uplink control channel resource when the terminal device determines that uplink control information needs to be sent.

With reference to the sixth aspect, in a possible implementation of the sixth aspect, sixth indication information is sent to the terminal device, where the sixth indication information indicates to switch from the frequency position of the third uplink control channel resource to the third uplink BWP when the terminal device determines that the sending of the uplink control information is completed.

Optionally, the fifth indication information and the sixth indication information are a same message.

With reference to the sixth aspect, in some implementations of the sixth aspect, the third control channel resource is located on either of two sides of bandwidth of the uplink carrier, so that a resource fragmentation problem caused when the uplink control channel resource is located in the middle of the bandwidth of the uplink carrier is avoided.

According to a seventh aspect, a communication apparatus is provided, including units configured to perform the steps in the communication method according to any one of the first aspect to the third aspect or the implementations of the first aspect to the third aspect.

In a design, the communication apparatus is a communication chip. The communication chip may include an input circuit or an interface configured to send information or data, and an output circuit or an interface configured to receive information or data.

In another design, the communication apparatus is a communication device (for example, a terminal device). A communication chip may include a transmitter configured to send information or data, and a receiver configured to receive information or data.

According to an eighth aspect, a communication apparatus is provided, including units configured to perform the steps in the communication method according to any one of the fourth aspect to the sixth aspect or the implementations of the fourth aspect to the sixth aspect.

In a design, the communication apparatus is a communication chip. The communication chip may include an input circuit or an interface configured to send information or data, and an output circuit or an interface configured to receive information or data.

In another design, the communication apparatus is a communication device (for example, a network device). A communication chip may include a transmitter configured to send information or data, and a receiver configured to receive information or data.

According to a ninth aspect, a communication device is provided, including a processor and a memory. The memory is configured to store a computer program. The processor is configured to invoke the computer program from the memory and run the computer program, so that the communication device performs the communication method according to any one of the first aspect to the sixth aspect or the implementations of the first aspect to the sixth aspect.

Optionally, there are one or more processors, and there are one or more memories.

Optionally, the memory may be integrated with the processor, or the memory and the processor are separately disposed.

Optionally, the communication device further includes a transmitter (transmitting device) and a receiver (receiving device).

According to a tenth aspect, a computer program product is provided. The computer program product includes a computer program (which may also be referred to as code or instructions). When the computer program is run, a computer is enabled to perform the communication method according to any one of the first aspect to the sixth aspect or the implementations of the first aspect to the sixth aspect.

According to an eleventh aspect, a computer-readable medium is provided. The computer-readable medium stores a computer program (which may also be referred to as code or instructions). When the computer program is run on a computer, the computer is enabled to perform the communication method according to any one of the first aspect to the sixth aspect or the implementations of the first aspect to the sixth aspect.

According to a twelfth aspect, a communication system is provided. The system includes at least one of the apparatus according to any design of the seventh aspect and the apparatus according to any design of the eighth aspect.

According to a thirteenth aspect, a chip system is provided, including a memory and a processor. The memory is configured to store a computer program, and the processor is configured to invoke the computer program from the memory and run the computer program, so that a communication device on which the chip system is installed performs the communication method according to any one of the first aspect to the sixth aspect or the implementations of the first aspect to the sixth aspect.

The chip system may include an input circuit or interface configured to send information or data, and an output circuit or interface configured to receive information or data.

### BRIEF DESCRIPTION OF DRAWINGS

FIG. 1 is a schematic diagram of an architecture of a mobile communication system used according to an embodiment of this application;
FIG. 2 is a schematic interaction diagram of an example of a communication method according to an embodiment of this application;
FIG. 3 is a schematic diagram of BWP switching according to an embodiment of this application;
FIG. 4 is a schematic interaction diagram of another example of a communication method according to an embodiment of this application;
FIG. 5 is a schematic diagram of frequency resource block switching according to an embodiment of this application;
FIG. 6 is a schematic interaction diagram of still another example of a communication method according to an embodiment of this application;
FIG. 7 is a schematic diagram of switching from a BWP to a control channel resource according to an embodiment of this application;
FIG. 8 is a schematic diagram of a communication apparatus according to an embodiment of this application;
FIG. 9 is a schematic diagram of another communication apparatus according to an embodiment of this application;
FIG. 10 is a schematic diagram of a communication apparatus according to an embodiment of this application; and
FIG. 11 is a schematic diagram of another communication apparatus according to an embodiment of this application.

### DESCRIPTION OF EMBODIMENTS

The following describes technical solutions of this application with reference to accompanying drawings.

The technical solutions of embodiments of this application may be used in various communication systems, for example, a global system for mobile communications (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunication system (Universal Mobile Telecommunication System, UMTS), a worldwide interoperability for microwave access (Worldwide Interoperability for Microwave Access, WiMAX) communication system, and a 5th generation (5th Generation, 5G) system or a new radio (New Radio, NR) system.

In embodiments of this application, a terminal device may be a device having a wireless transceiver function. The terminal device may be deployed on the land, for example, the terminal device is an indoor device, an outdoor device, a handheld device, or a vehicle-mounted device; or the terminal device may be deployed on the water (for example, on a ship); or the terminal device may be deployed in the air (for example, on a plane, a balloon, or a satellite). The terminal device may be user equipment (user equipment, UE). The UE includes a handheld device, an in-vehicle device, a wearable device, or a computing device having a wireless communication function. For example, the UE may be a mobile phone (mobile phone), a tablet computer, or a computer having a wireless transceiver function. The terminal device may alternatively be a virtual reality (virtual reality, VR) terminal device, an augmented reality (augmented reality, AR) terminal device, a wireless terminal in industrial control, a wireless terminal in self driving, or the like. In embodiments of this application, an apparatus configured to implement a function of the terminal device may be an apparatus that can support the terminal device in implementing the function, for example, a chip system. The apparatus may be installed in the terminal. The chip system may include a chip, or may include a chip and another discrete device.

The terminal device in this application may be a first-type terminal device or a second-type terminal device. The first-type terminal device and the second-type terminal device may have at least one of the following distinguishing features:
1. Bandwidth capabilities are different. For example, bandwidth supported by the first-type terminal device is less than bandwidth supported by the second-type terminal device.
2. Transceiver antenna quantities are different. For example, a transceiver antenna quantity supported by the first-type terminal device is less than a transceiver antenna quantity supported by the second-type terminal device.
3. Maximum uplink transmit power is different. For example, maximum uplink transmit power supported by the first-type terminal device is less than maximum uplink transmit power supported by the second-type terminal device.
4. Protocol releases are different. For example, the first-type terminal device may be a terminal device in NR Release 17 (release-17, Rel-17) or a release that comes after NR Rel-17. The second-type terminal device may be, for example, a terminal device in NR Release 15 (release-15, Rel-15) or NR Release 16 (release-16, Rel-16). The second-type terminal device may also be referred to as an NR legacy (NR legacy) terminal device.
5. Data processing capabilities are different. For example, a minimum delay between receiving, by the first-type terminal device, downlink data and sending a feedback on the downlink data is greater than a minimum delay between receiving, by the second-type terminal device, downlink data and sending a feedback on the downlink data; and/or a minimum delay between sending, by the first-type terminal device, uplink data and receiving a feedback on the uplink data is greater than a minimum delay between sending, by the second-type terminal device, uplink data and receiving a feedback on the uplink data.

In a possible implementation, the first-type terminal device may be a low capability (reduced capability, REDCAP) terminal device, or the first-type terminal device may be a low capability terminal device, a reduced capability terminal device, a REDCAP UE, a Reduced Capacity UE, a narrowband NR (narrow-band NR, NB-NR) UE, an energy-saving UE, or the like. The second-type terminal device may be a terminal device with a legacy capability, a normal capability, or a high capability, and may also be referred to as a legacy (legacy) terminal device or a normal (normal) terminal device. The second-type terminal device and the first-type terminal device have but are not limited to having the foregoing distinguishing features.

A network device in embodiments of this application may be a device configured to communicate with a terminal device. The network device may be a base transceiver station (Base Transceiver Station, BTS) in the global system for mobile communications (Global System of Mobile communication, GSM) or the code division multiple access (Code Division Multiple Access, CDMA) system, a NodeB (NodeB, NB) in the wideband code division multiple access (Wideband Code Division Multiple Access, WCDMA) system, an evolved NodeB (Evolved NodeB, eNB or eNodeB) in the LTE system, or a radio controller in a cloud radio access network (Cloud Radio Access Network, CRAN) scenario. Alternatively, the network device may be a relay station, an access point, a vehicle-mounted device, a wearable device, a network device in a 5G network, a network device in an evolved PLMN network, or the like. This is not limited in embodiments of this application.

The following briefly describes terms in a conventional technology in this application.

### 1. Bandwidth part BWP

A BWP (Bandwidth Part) is subset bandwidth of total bandwidth of a cell, and is a segment of continuous frequency resource.

In embodiments of this application, the BWP is used as an example for description. The BWP is defined as a continuous frequency resource that is not greater than a bandwidth capability of the terminal device and that is in a frequency range, and the BWP includes consecutive RBs. Extendedly, the BWP may be represented by using another resource block, and is not limited to a name of the BWP. When the BWP is described by using another term, a frequency resource corresponding to the term and the BWP should have a same feature, to be specific, include consecutive RBs (Resource Blocks). However, whether a frequency range thereof is less than the bandwidth capability of the terminal device is not limited in embodiments of this application.

### 2. Determining of different BWPs

In the conventional technology, if configuration parameters corresponding to two BWPs are different in at least one of the following, it is considered that the two BWPs are different, and the two different BWPs have two different BWP IDs:
(1) Center frequency positions corresponding to the two BWPs are different.
(2) BWP bandwidth corresponding to the two BWPs is different.
(3) Subcarrier spacings (subcarrier spacings, SCSs) used for data transmission corresponding to the two BWPs are different.
(4) Multiple input multiple output (multiple input multiple output, MIMO) data transmission layer quantities or antenna quantities corresponding to the two BWPs are different.
(5) Physical downlink control channel (physical downlink control channel, PDCCH) configurations, PDSCH configurations, physical uplink control channel (physical uplink control channel, PUCCH) configurations, or physical uplink shared channel (physical uplink shared channel, PUSCH) configurations corresponding to the two BWPs are different.

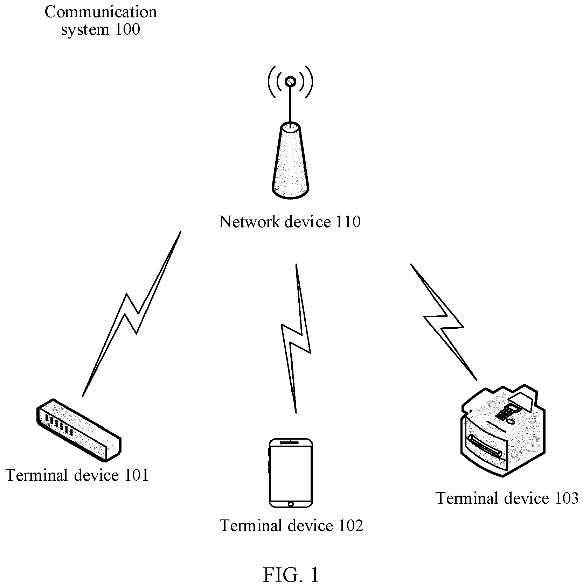

FIG. 1 is a schematic diagram of a structure of a communication system according to an embodiment of this application. As shown in FIG. 1, a technical solution in embodiments of this application may be applied to the communication system 100. The communication system 100 includes a network device 110 and at least one terminal device (for example, a terminal device 101, a terminal device 102, and a terminal device 103 in FIG. 1). The terminal device may be located at a fixed position, or may be mobile. FIG. 1 is only a schematic diagram. The communication system may further include another network device, for example, may further include a wireless relay device and a wireless backhaul device, which are not shown in FIG. 1. Quantities of network devices and terminal devices included in the mobile communication system are not limited in embodiments of this application. This application may be applied to an existing cellular communication system, or may be applied to any other wireless communication system having a similar structure and function.

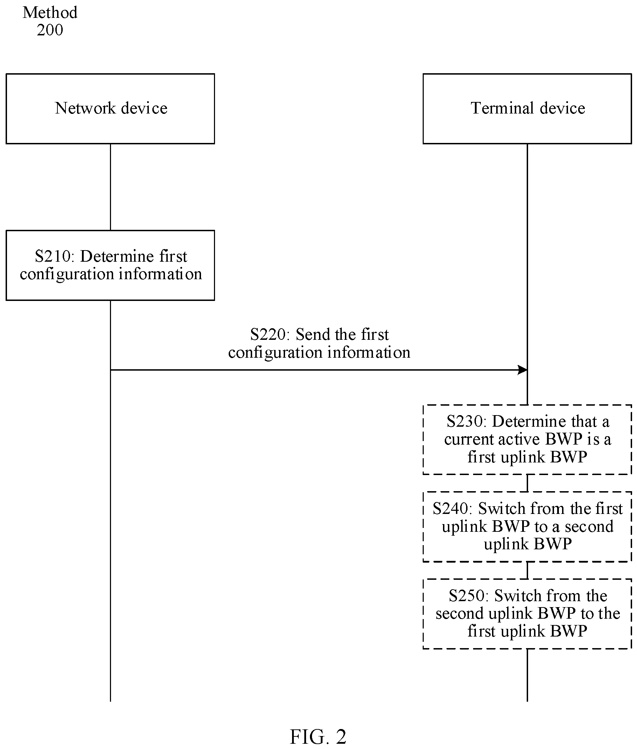

FIG. 2 is a schematic interaction diagram of a communication method 200 according to an embodiment of this application. As shown in FIG. 2, the method 200 includes the following steps. S210: A network device determines first configuration information.

The first configuration information includes at least one first uplink BWP and at least one second uplink BWP. There is no first uplink control channel resource in the first uplink BWP. There is a first uplink control channel resource in the second uplink BWP. The first uplink BWP and the second uplink BWP are on a same uplink carrier.

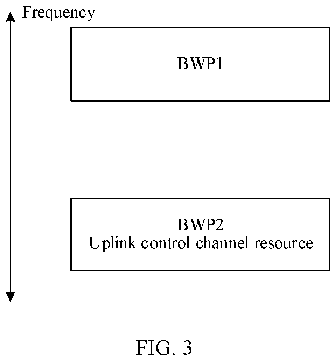

It should be noted that the first uplink BWP and the second uplink BWP are shown in FIG. 3. Specifically, each BWP in the at least one first uplink BWP and the at least one second uplink BWP has a different BWP ID. In other words, both the at least one first uplink BWP and the at least one second uplink BWP meet a condition that is for distinguishing between different BWPs and that is defined in a conventional technology. In a preferred manner, a frequency range of the at least one first uplink BWP is different from a frequency range of the at least one second uplink BWP, and that the frequency ranges are different includes that center frequency positions and/or bandwidth sizes of the BWPs are different.

It should be noted that, in a preferred implementation, the second uplink BWP may be configured on either of two sides of the uplink carrier, in other words, the first uplink control channel resource is located on either of the two sides of the uplink carrier, so that a resource fragmentation problem caused when the first uplink control channel resource is distributed in the middle of but not on either of two sides of a carrier frequency resource is resolved, resource allocation flexibility and network resource utilization are improved, and transmission efficiency of a terminal device is improved.

It should be noted that the uplink BWP includes an initial uplink BWP and a user-dedicated uplink BWP. The uplink control channel resource includes a common uplink control channel resource and a user-dedicated uplink control channel resource. In an implementation, if the uplink BWP is an initial uplink BWP, the uplink control channel resource is a common uplink control channel resource. If the uplink BWP is a user-dedicated uplink BWP, the uplink control channel resource is a user-dedicated uplink control channel resource.

In a possible implementation, that there is no first uplink control channel resource in the first uplink BWP specifically represents that there is no first uplink control channel resource in a frequency range of the first uplink BWP; and that there is a first uplink control channel resource in the second uplink BWP specifically represents that there is the first uplink control channel resource in a frequency range of the second uplink BWP.

In another possible implementation, the network device further configures an activation status of the first uplink control channel resource; that there is no first uplink control channel resource in the first uplink BWP specifically represents that there is no first uplink control channel resource in a frequency range of the first uplink BWP, or there is the first uplink control channel resource in a frequency range of the first uplink BWP and the first uplink control channel resource is in an inactive state; and that there is a first uplink control channel resource in the second uplink BWP specifically represents that there is the first uplink control channel resource in a frequency range of the second uplink BWP, and an activation status of the first uplink control channel resource is an active state.

Specifically, the network device configures the activation status of the first uplink control channel resource in an initial configuration phase, where the activation status is active or inactive.

Specifically, in a working process of the terminal device, the network device may dynamically change the activation status of the first uplink control channel resource, and a change to the activation status of the first uplink control channel resource may be dynamically configured by using one piece of network signaling.

It should be noted that, that there is the first uplink control channel resource in a frequency range of the first uplink BWP and the activation status of the first uplink control channel resource is inactive is equivalent to that there is no first uplink control channel resource in the frequency range of the first uplink BWP, and a time-frequency resource of the inactive first uplink control channel resource may be used for transmission, such as data transmission, other than uplink control information transmission. The active state or the inactive state may also be referred to as valid or invalid, or the like. Correspondingly, they all indicate that the first uplink control channel resource can be used to send uplink control information or cannot be used to send uplink control information. The network device may pre-configure an activation status of a first uplink control channel resource in a plurality of BWPs, and dynamically change the activation status of the at least one first uplink control channel resource in the plurality of BWPs by using signaling, so that the first uplink control channel resource is configured more flexibly, thereby reducing resource overheads. S220: The network device sends the first configuration information to the terminal device, correspondingly the terminal device receives the first configuration information from the network device, and further, the terminal device determines the at least one first uplink BWP and the at least one second uplink BWP based on the first configuration information.

In a possible implementation, the first configuration information includes configuration information of the at least one first uplink BWP and configuration information of the at least one second uplink BWP. The configuration information of the at least one first uplink BWP includes at least a BWP ID, a frequency position, and bandwidth size information, and the configuration information of the at least one second uplink BWP includes at least a BWP ID, a frequency position, bandwidth size information, and configuration information of the first uplink control channel resource.

In a possible implementation, the configuration information includes configuration information of the at least one first uplink BWP and configuration information of the at least one second uplink BWP. The configuration information of the at least one first uplink BWP includes at least a BWP ID, a frequency position, bandwidth size information, configuration information of the first uplink control channel resource, and activation status information, and the configuration information of the at least one second uplink BWP includes at least a BWP ID, a frequency position, bandwidth size information, configuration information of the first uplink control channel resource, and activation status information.

As described above, further, in the working process of the terminal device, the network device may dynamically change an activation status of a first uplink control channel resource in at least one BWP in the at least one first uplink BWP and the at least one second uplink BWP by using network signaling, where the activation status changes to active or inactive. For example, the network device indicates at least one BWP by using network signaling, and indicates a first uplink control channel resource in the at least one BWP to switch from an active state to an inactive state or from an inactive state to an active state. It should be noted that, in this implementation, the terminal device uses an activation status of the first uplink control channel resource at a current moment. The network signaling may be, for example, SIB1 signaling, RRC signaling, a MAC CE, or DCI.

S230: The terminal device determines that a currently-working active BWP is the first uplink BWP. Specifically, before the terminal device determines that the currently-working active BWP is the first uplink BWP, the terminal device needs to determine that the uplink control information needs to be sent. In this case, the terminal device determines whether the currently-working active BWP is the first uplink BWP or the second uplink BWP. If the terminal device determines that the currently-working active BWP is the first uplink BWP, a next step S240 is performed. If the terminal device determines that the currently-working active BWP is the second uplink BWP, when needing to send the uplink control information, the terminal device may send the uplink control information on the first uplink control channel resource in the currently-working active BWP.

It should be noted that, if the terminal device does not need to send the uplink control information, the terminal device does not perform this step and the following steps.

It should be noted that the network device may configure a plurality of BWPs for the terminal device. As described above, in this embodiment of this application, the plurality of BWPs include at least one first uplink BWP and at least one second uplink BWP. The network device indicates, by using signaling, that one of the BWPs is a currently-working active BWP of the terminal device. The terminal can send and receive data or control information only in the active BWP. In other words, the terminal device can work only in one BWP at a same time point, and the BWP is an active BWP of the terminal device at the time point. It should be noted that a meaning represented by "active" in the active BWP is different from that represented by "active" in "the first uplink control channel resource in the BWP is in the active state" described above. In other words, an active state of the BWP is independent of the active state of the first uplink control resource in the BWP.

S240: The terminal device switches from the first uplink BWP to the second uplink BWP, and sends the uplink control information on the first uplink control channel resource of the second uplink BWP.

In a possible implementation, the switching may be autonomously initiated by the terminal device according to a first rule. The first rule is predefined in a protocol. The first rule is specifically that when the terminal device needs to send the uplink control information, the terminal device switches from the currently-working first uplink BWP to the second uplink BWP, and further sends the uplink control information on the first uplink control channel resource of the second uplink BWP.

It should be noted that, for the foregoing descriptions, the terminal device autonomously initiates the switching according to the first rule. When the network device configures a plurality of second uplink BWPs, the network device uses signaling to pre-configure that the first uplink BWP is associated with one of the plurality of second uplink BWPs. The signaling may include SIB1 signaling, RRC signaling, a MAC CE, DCI, and the like. When performing BWP switching according to the first rule, the terminal device switches to the associated second uplink BWP based on pre-configuration information.

In a possible implementation, the network device may send first indication information to the terminal device to indicate the terminal device to perform the switching. The first indication information indicates the terminal device to switch, when the terminal device needs to send the uplink control information, from the currently-working first uplink BWP to the second uplink BWP, and further send the uplink control information on the first uplink control channel resource of the second uplink BWP.

It should be noted that for the foregoing two possible implementations, when the network device configures a plurality of second uplink BWPs, the foregoing two possible implementations respectively have two specific implementations. Implementation 1: The network device pre-configures, by using signaling, that the first uplink BWP is associated with one of the plurality of second uplink BWPs. The signaling may include SIB 1 signaling, RRC signaling, MAC CE signaling, DCI, and the like. The first indication information is used only to trigger the terminal device to switch from the first uplink BWP to the pre-configured associated second uplink BWP. Implementation 2: The network device does not pre-configure, by using signaling, that the first uplink BWP is associated with one of the plurality of second uplink BWPs. When triggering the terminal device to perform BWP switching, the first indication information further indicates an ID of a BWP in which the first uplink control channel resource for the terminal device to perform sending is located.

It should be noted that the terminal device may alternatively send, for example, data information on another resource other than the first uplink control channel resource in the second uplink BWP. Specifically, the switching may be switching performed by the terminal device based on the BWP IDs in the first configuration information.

It should be noted that, that the terminal device switches from the first uplink BWP to the second uplink BWP represents that the active BWP of the terminal device changes from the first uplink BWP to the second uplink BWP, that is, the BWP switching is performed. This process may also be referred to as BWP frequency hopping, BWP sliding, BWP retuning, radio frequency retuning, or the like. The foregoing names are equivalent. This is not limited in this embodiment of this application.

S250: The terminal device switches from the second uplink BWP to the first uplink BWP. Specifically, after determining that the sending of the uplink control information is completed, the terminal device switches from the second uplink BWP to the first uplink BWP.

It should be noted that after determining that the sending of the uplink control information is completed, the terminal device may alternatively not perform switching, and directly send, for example, data information, on another resource other than the first uplink control channel resource in the second uplink BWP.

In a possible implementation, the switching may be autonomously initiated by the terminal device according to a second rule. The second rule is predefined in a protocol. The second rule is specifically that the terminal device switches from the second uplink BWP to the first uplink BWP when determining that the sending of the uplink control information is completed.

In a possible implementation, the network device may send second indication information to the terminal device to indicate the terminal device to perform the switching. The second indication information indicates the terminal device to switch, when the terminal device determines that the sending of the uplink control information is completed, from the second uplink BWP to the first uplink BWP.

Specific implementations of the foregoing two possible implementations are basically the same as those of step S240. Refer to related descriptions of S240.

In another possible implementation, the switching may be switching triggered by a timer. The timer is started after the switching is completed in step S240. After time of the timer reaches predetermined duration, the terminal device switches from the second uplink BWP to the first uplink BWP based on the triggering of the timer. The predetermined duration of the timer may be default duration for completing the sending of the uplink control information, or may be configured by the network device by using signaling.

Specifically, the switching may be switching performed by the terminal device based on the BWP IDs in the first configuration information.

It should be noted that the first uplink BWP in the switching in step S250 may be an original active BWP in which the terminal device performs the switching in S240, or may be any first uplink BWP configured by the network device.

It should be noted that, as described in step S240, the switching may have a plurality of names, and details are not described herein again.

Optionally, when the terminal device determines that the uplink control information needs to be transmitted and the currently-working active BWP is the first uplink BWP, the terminal device may further determine whether there is uplink physical shared channel transmission on the currently-working active first uplink BWP at a moment when uplink control needs to be sent. If there is the uplink physical shared channel transmission on the currently-working active first uplink BWP, the terminal device may transmit the uplink control information through the uplink physical shared channel transmission. If there is no uplink physical shared channel transmission, the BWP switching is performed.

It should be noted that the method 200 is applicable to an initial access phase of the terminal device, and is also applicable to a process after initial access of the terminal device. If the terminal device works in the initial uplink BWP in the initial access phase, the first uplink control channel resource is a common uplink control channel resource. If the terminal device works, in the process after the initial access, in an uplink BWP configured with a user-dedicated parameter, the first uplink control channel resource is a user-dedicated uplink control channel resource.

In this embodiment of this application, in a same uplink carrier, some included BWPs are configured with an uplink control channel resource, and some included BWPs are configured with no uplink control channel resource. When the terminal device needs to send uplink control information, the terminal device switches to the BWP configured with the uplink control channel resource to perform the sending. According to this configuration method, overheads of the uplink control channel resources are reduced, and the transmission efficiency of the terminal device is improved. In addition, the BWP configured with the uplink control channel resource is located on either of two sides of the uplink carrier, so that an uplink resource fragmentation problem is avoided.

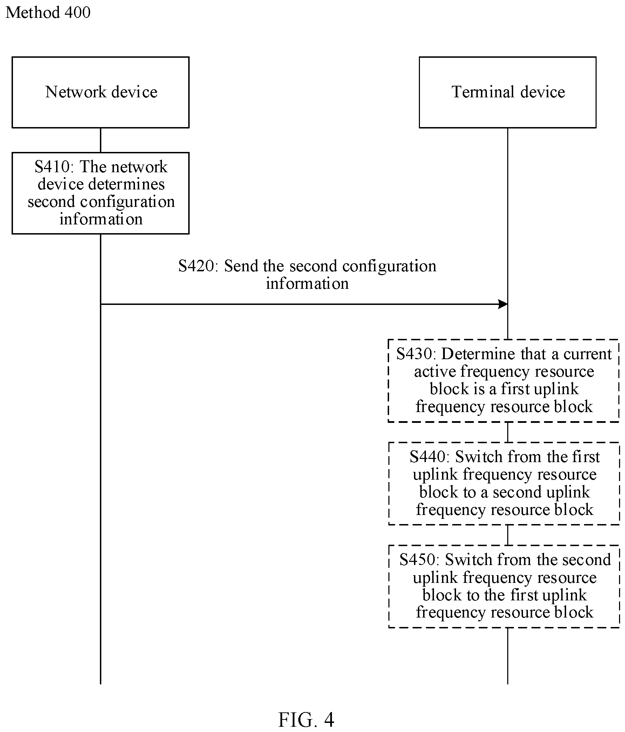

FIG. 4 is a schematic interaction diagram of a communication method 400 according to an embodiment of this application. As shown in FIG. 4, the method 400 includes the following steps. S410: A network device determines second configuration information, where the second configuration information includes at least one first uplink frequency resource block and at least one second uplink frequency resource block, there is no second uplink control channel resource in the first uplink frequency resource block, there is a second uplink control channel resource in the second uplink frequency resource block, a BWP index of the first uplink frequency resource block is the same as a BWP index of the second uplink frequency resource block, and the first uplink frequency resource block and the second uplink frequency resource block are on a same uplink carrier.

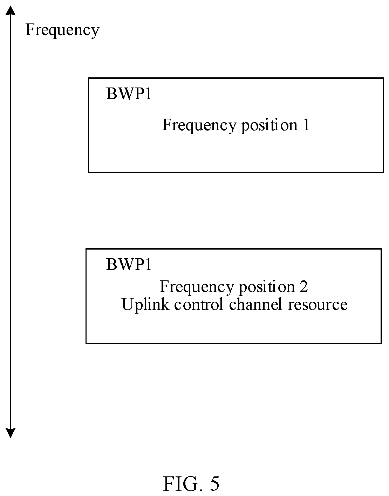

It should be noted that the at least one first uplink frequency resource block and the at least one second uplink frequency resource block are shown in FIG. 5. FIG. 5 is a schematic diagram of the first uplink resource block and the second uplink resource block. As shown in the figure, the at least one first uplink frequency resource block and the at least one second uplink frequency resource block have a same BWP ID. In logic of this embodiment of the present invention, the at least one first uplink frequency resource block and the at least one second uplink frequency resource block are considered as a same uplink BWP. To distinguish from a definition in a conventional technology, in this embodiment of the present invention, the at least one first uplink frequency resource block and the at least one second uplink frequency resource block are referred to as uplink frequency resource blocks. In a preferred manner, that the at least one first uplink frequency resource block and the at least one second uplink frequency resource block have the same BWP ID and different frequency positions is specifically: The at least one first uplink frequency resource block and the at least one second uplink frequency resource block use the same BWP ID, different center frequency positions, and same bandwidth. For example, as shown in the figure, switching of a center frequency position from a frequency position 1 to a frequency position 2 is switching between the first uplink frequency resource block and the second uplink frequency resource block. However, it is still considered that the first uplink frequency resource block is BWP1 and the second uplink frequency resource block is also BWP1. It should be specially noted that neither the first uplink frequency resource block nor the second uplink frequency resource block is one part of BWP1 frequency resource, but they may each be considered as BWP1, and their bandwidth is both bandwidth of BWP1, because their BWP IDs are the same as BWP1 and their bandwidth is the bandwidth of BWP1.

In addition to the foregoing descriptions, meanings of positions, activation statuses, and the like of the first uplink frequency resource block and the second uplink frequency resource are similar to those described in the method 200, and only the uplink BWP needs to be replaced with the uplink frequency resource block. For details, refer to related descriptions of step S210 in the method 200.

S420: The network device sends the second configuration information to a terminal device, correspondingly the terminal device receives the second configuration information from the network device, and further, the terminal device determines the at least one first uplink frequency resource block and the at least one second uplink frequency resource block based on the second configuration information.

For related content of this step, refer to related descriptions of step S220 in the method 200. S430: The terminal device determines that a currently-working active frequency resource block is the first uplink frequency resource block.

It should be noted that, because a same BWP is specially defined in this embodiment of this application, to distinguish from the conventional technology, a same BWP that has a same BWP ID but different frequency positions in this embodiment of this application is replaced with a name of a frequency resource block. In this case, the terminal device still works on an active uplink BWP. For distinguishing, it is referred to as that the terminal device works on an active uplink frequency resource block.

For other related content of this step, refer to related descriptions of step S230 in the method 200. S440: The terminal device switches from the first uplink frequency resource block to the second uplink frequency resource block, and further sends uplink control information on a second uplink control channel resource of the second uplink frequency resource block.

It should be noted that the switching in the method 400 is frequency position switching performed by the terminal device based on the second configuration information. Compared with BWP ID switching, the directly performed frequency position switching has lower complexity and shorter time consumption, so that transmission efficiency of the terminal device is improved.

For other related content of this step, refer to related descriptions of step S240 in the method 200. S450: The terminal device switches from a second uplink BWP to a first uplink BWP.

It is the same as step S440 that, the switching may be frequency position switching performed by the terminal device based on the second configuration information.

For other related content of this step, refer to related descriptions of step S250 in the method 200. In this embodiment of this application, in a same uplink carrier, some included uplink frequency resource blocks are configured with an uplink control channel resource, and some included uplink frequency resource blocks are configured with no uplink control channel resource. When the terminal device needs to send uplink control information, the terminal device switches to the uplink frequency resource block configured with the uplink control channel resource to perform the sending. According to this configuration method, overheads of the uplink control channel resources are reduced, and the transmission efficiency of the terminal device is improved. In addition, the BWP configured with the uplink control channel resource is located on either of two sides of the uplink carrier, so that an uplink resource fragmentation problem is avoided. Further, setting a BWP ID and a BWP frequency position shortens switching time, reduces switching complexity, and further improves the transmission efficiency of the terminal device.

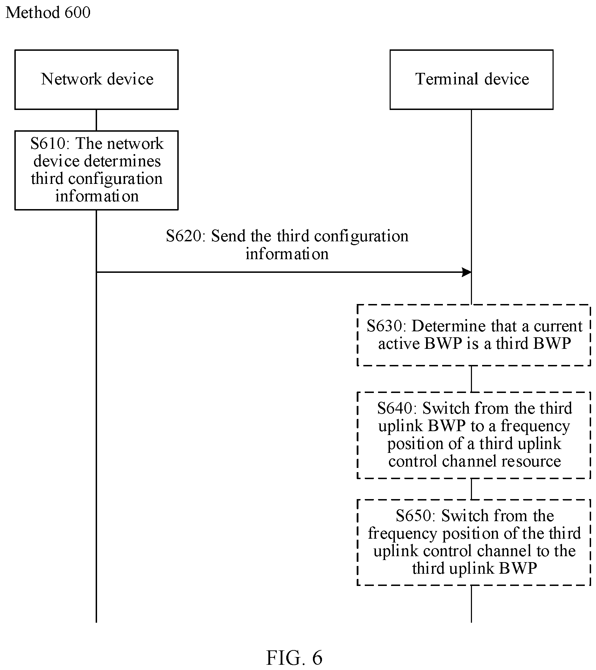

FIG. 6 is a schematic interaction diagram of a communication method 600 according to an embodiment of this application. As shown in FIG. 6, the method 600 includes the following steps. S610: A network device determines third configuration information, where the third configuration information includes at least one third uplink BWP, there is no fourth uplink control channel resource in the third uplink BWP, the configuration information of the third uplink BWP includes configuration information of at least one third uplink control channel resource, and a frequency position of the third uplink control channel resource is outside a frequency range of the third uplink BWP.

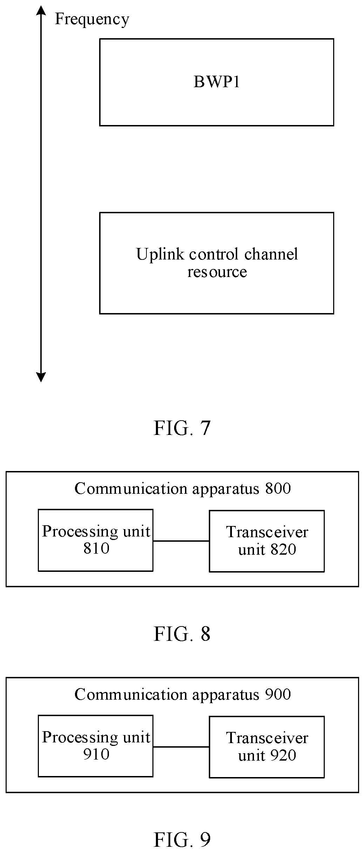

It should be noted that, the at least one third uplink BWP and the at least one third uplink control channel resource are shown in FIG. 7. FIG. 7 is a schematic diagram of the third uplink BWP and the third uplink control channel resource. FIG. 7 shows a relationship between the third uplink BWP and the third uplink control channel resource, and the third uplink control channel resource is outside a frequency range of the third uplink BWP.

It should be understood that, that the configuration information of the third uplink BWP includes configuration information of at least one third uplink control channel resource may be understood as that there is a binding relationship between the third uplink BWP and the at least one third uplink control channel resource outside the frequency range of the third uplink BWP. The third uplink control channel resource may belong to another BWP or be only a segment of independent resource on a frequency resource. This is not limited in this embodiment of this application.

Specifically, the configuration information of the third uplink control channel resource may be, for example, a frequency position thereof. The frequency resource position may be configured with reference to a position of a common resource block without depending on a configuration of the third uplink BWP. For example, if the frequency position of the third uplink control channel resource has an offset x relative to a frequency position of a common resource block CRB 0, the frequency position of the third uplink control channel resource is: the frequency position of the CRB 0 + the offset x. Alternatively, the frequency resource position may be configured with reference to the third uplink BWP. For example, if the third uplink control channel resource is configured to have an offset Y relative to a lowest frequency position of the third uplink BWP, an actual position of the third uplink control channel resource is: the lowest frequency position of the third uplink BWP + the offset Y

For a meaning of that there is no fourth uplink control channel resource in the third uplink BWP, a meaning of an activation status, and the like, refer to related descriptions in the method 200.

Optionally, an activation status of the third uplink control channel resource may be dynamically configured by using signaling of the network device. In this embodiment of this application, it is considered that the activation status of the third uplink control channel resource is an active state. If there is another third uplink control channel resource in an inactive state, when the network device dynamically configures, by using signaling, an activation status of the another third uplink control channel resource to change from the inactive state to the active state, the another third uplink control channel resource is also classified as the third uplink control channel resource in this embodiment.

Optionally, there may be an inactive uplink control channel resource in the frequency range of the third uplink BWP. This case is not described in detail in this embodiment of this application.

S620: The network device sends the third configuration information to a terminal device, correspondingly the terminal device receives the third configuration information from the network device, and further, the terminal device determines the at least one third uplink BWP and the at least one third uplink control channel resource based on the third configuration information.

For related content of this step, refer to related descriptions of step S220 in the method 200. S630: The terminal device determines that a currently-working active BWP is the third uplink BWP.

S640: The terminal device switches from the third uplink BWP to the frequency position of the third uplink control channel resource, and further sends uplink control information on a third uplink control channel.

The third uplink control channel resource includes a frequency resource and a time domain resource, and the switching from the third uplink BWP to the frequency position of the third uplink control channel resource is switching to a frequency resource of the third uplink control channel. It should be noted that the frequency resource may also be understood as a frequency domain position.

It should be noted that the switching in this step is directly switching, by the terminal device, from the third uplink BWP to the frequency position of the third uplink control channel resource, and is no longer switching between two BWPs or switching between two frequency resource blocks, but is directly switching from a BWP to an uplink control channel resource.

It should be specially noted that, because the terminal device directly switches to the uplink control channel resource, the terminal device can send the uplink control information only on the uplink control channel resource. A difference from the method 200 and the method 400 is as follows: In the method 200 and the method 400, switching to a BWP or a frequency resource block is performed, and thereon, in addition to an uplink control channel resource, there is another resource used to send, for example, data information; and therefore, when the terminal device switches to the BWP or the frequency resource block, the terminal device may send information, such as data information, other than the uplink control information. However, in this embodiment of the method 600, the terminal device can send the uplink control information only on the third uplink control channel resource, and when needing to send other information, the terminal device can only switch back to the third uplink BWP.

For other related content of this step, refer to related descriptions of step S240 in the method 200. S650: The terminal device switches from the third uplink control channel resource to the third uplink BWP.

It is similar to step S640 that, the switching may be switching, by the terminal device, from the frequency position of the third uplink control channel resource to a BWP ID of the third uplink BWP based on the third configuration information.

For other related content of this step, refer to related descriptions of step S250 in the method 200. In this embodiment of this application, no uplink control channel resource is configured in a frequency range of a BWP included in an uplink carrier, and an uplink control channel resource associated with the BWP is configured outside the frequency range of the BWP. When the terminal device needs to send uplink control information, the terminal device switches from the BWP to a frequency range of the uplink control channel resource to perform the sending. According to this configuration method, overheads of the uplink control channel resources are reduced, and transmission efficiency of the terminal device is improved. In addition, the uplink control channel resource is located on either of two sides of the uplink carrier, so that an uplink resource fragmentation problem is avoided.

FIG. 8 is a schematic block diagram of a communication apparatus 800 according to an embodiment of this application. The communication apparatus 800 is configured to perform the foregoing methods or steps corresponding to the terminal device. Optionally, each unit in the communication apparatus 800 may be implemented by using software. The corresponding terminal device in the method 200 is used as an example for description. Steps performed by the terminal device in the method 400 and the method 600 are similar to the steps performed by the terminal device in the method 200, and details are not described herein again. As shown in FIG. 8, the communication apparatus 800 includes:
a transceiver unit 820, configured to receive first configuration information; and
a processing unit 810, configured to determine the first configuration information, where the first configuration information includes at least one first uplink BWP and at least one second uplink BWP, there is no first uplink control channel resource in the first uplink BWP, there is a first uplink control channel resource in the second uplink BWP, and the first uplink BWP and the second uplink BWP are on a same uplink carrier.

It should be noted that the first uplink BWP and the second uplink BWP are shown in FIG. 3. Specifically, each BWP in the at least one first uplink BWP and the at least one second uplink BWP has a different BWP ID. In other words, both the at least one first uplink BWP and the at least one second uplink BWP meet a condition that is for distinguishing between different BWPs and that is defined in a conventional technology. In a preferred manner, a frequency range of the at least one first uplink BWP is different from a frequency range of the at least one second uplink BWP, and that the frequency ranges are different includes that center frequency positions and/or bandwidth sizes of the BWPs are different.

It should be noted that, in a preferred implementation, a network device may configure the second uplink BWP on either of two sides of the uplink carrier, in other words, the first uplink control channel resource is located on either of the two sides of the uplink carrier, so that a resource fragmentation problem caused when the first uplink control channel resource is distributed in the middle of but not on either of two sides of a carrier frequency resource is resolved, resource allocation flexibility and network resource utilization are improved, and transmission efficiency of the terminal device is improved.

It should be noted that the uplink BWP includes an initial uplink BWP and a user-dedicated uplink BWP. The uplink control channel resource includes a common uplink control channel resource and a user-dedicated uplink control channel resource. In an implementation, if the uplink BWP is an initial uplink BWP, the uplink control channel resource is a common uplink control channel resource. If the uplink BWP is a user-dedicated uplink BWP, the uplink control channel resource is a user-dedicated uplink control channel resource.

In a possible implementation, that there is no first uplink control channel resource in the first uplink BWP specifically represents that there is no first uplink control channel resource in the frequency range of the first uplink BWP; and that there is a first uplink control channel resource in the second uplink BWP specifically represents that there is the first uplink control channel resource in the frequency range of the second uplink BWP.

In another possible implementation, the network device further configures an activation status of the first uplink control channel resource; that there is no first uplink control channel resource in the first uplink BWP specifically represents that there is no first uplink control channel resource in a frequency range of the first uplink BWP, or there is the first uplink control channel resource in a frequency range of the first uplink BWP and the first uplink control channel resource is in an inactive state; and that there is a first uplink control channel resource in the second uplink BWP specifically represents that there is the first uplink control channel resource in the frequency range of the second uplink BWP, and the activation status of the first uplink control channel resource is an active state.

Specifically, the processing unit 810 is further configured to determine that the network device configures the activation status of the first uplink control channel resource in an initial configuration phase, where the activation status is active or inactive.

Specifically, in a working process of the terminal device, the network device may dynamically change the activation status of the first uplink control channel resource, and a change to the activation status of the first uplink control channel resource may be dynamically configured by using one piece of network signaling. The transceiver unit 820 is further configured to receive the network signaling.

The processing unit 810 is further configured to determine a currently-working active BWP.

Specifically, before the processing unit 810 determines that the currently-working active BWP is the first uplink BWP, the processing unit 810 needs to determine whether the currently-working active BWP is the first uplink BWP or the second uplink BWP. If the processing unit 810 determines that the currently-working active BWP is the first uplink BWP, a next step S240 in the method 200 is performed. If determining that the currently-working active BWP is the second uplink BWP, the processing unit 810 determines that when uplink control information needs to be sent, the uplink control information may be sent on the first uplink control channel resource in the currently-working active BWP. The uplink control information is sent by the transceiver unit 820. It should be noted that the network device may configure a plurality of BWPs. As described above, in this embodiment of this application, the plurality of BWPs include at least one first uplink BWP and at least one second uplink BWP. The network device indicates, by using signaling, that one of the BWPs is a currently-working active BWP of the terminal device. The terminal can send and receive data or control information only in the active BWP. In other words, the terminal device can work only in one BWP at a same time point, and the BWP is an active BWP of the terminal device at the time point. It should be noted that a meaning represented by "active" in the active BWP is different from that represented by "active" in "the first uplink control channel resource in the BWP is in the active state" described above. In other words, an active state of the BWP is independent of the active state of the first uplink control resource in the BWP.

The processing unit 810 is further configured to perform switching, by the terminal device, from the first uplink BWP to the second uplink BWP.

The transceiver unit 820 is further configured to send the uplink control information. Specifically, before the switching, the processing unit 810 determines that the uplink control information needs to be sent.

In a possible implementation, the switching may be autonomously initiated by the processing unit 810 according to a first rule. The first rule is predefined in a protocol. The first rule is specifically that when the terminal device needs to send the uplink control information, the terminal device switches from the currently-working first uplink BWP to the second uplink BWP, and further sends the uplink control information on the first uplink control channel resource of the second uplink BWP.

It should be noted that, for the foregoing descriptions, the processing unit 810 autonomously initiates the switching according to the first rule. When the network device configures a plurality of second uplink BWPs, the network device uses signaling to pre-configure that the first uplink BWP is associated with one of the plurality of second uplink BWPs. The signaling may include SIB1 signaling, RRC signaling, a MAC CE, DCI, and the like. The transceiver unit 810 is further configured to receive the network signaling, and when performing BWP switching according to the first rule, the processing unit 810 switches to the associated second uplink BWP based on pre-configuration information.

In a possible implementation, the network device may send first indication information to the terminal device to indicate the terminal device to perform the switching. The transceiver unit 810 is further configured to receive the indication information. The first indication information indicates the terminal device to switch, when the terminal device needs to send the uplink control information, from the currently-working first uplink BWP to the second uplink BWP, and further send the uplink control information on the first uplink control channel resource of the second uplink BWP.

It should be noted that for the foregoing two possible implementations, when the network device configures a plurality of second uplink BWPs, the foregoing two possible implementations respectively have two specific implementations. Implementation 1: The network device pre-configures, by using signaling, that the first uplink BWP is associated with one of the plurality of second uplink BWPs. The signaling may include SIB1 signaling, RRC signaling, MAC CE signaling, DCI, and the like. The first indication information is used only to trigger the terminal device to switch from the first uplink BWP to the pre-configured associated second uplink BWP. Implementation 2: The network device does not pre-configure, by using signaling, that the first uplink BWP is associated with one of the plurality of second uplink BWPs. When triggering the terminal device to perform BWP switching, the first indication information further indicates an ID of a BWP in which the first uplink control channel resource for the terminal device to perform sending is located.

It should be noted that the transceiver unit 820 may alternatively send, for example, data information on another resource other than the first uplink control channel resource in the second uplink BWP.

Specifically, the switching may be switching performed by the processing unit 820 based on the BWP IDs in the first configuration information.

It should be noted that, that the processing unit 820 switches from the first uplink BWP to the second uplink BWP represents that the active BWP of the terminal device changes from the first uplink BWP to the second uplink BWP, that is, the BWP switching is performed. This process may also be referred to as BWP frequency hopping, BWP sliding, BWP retuning, radio frequency retuning, or the like. The foregoing names are equivalent. This is not limited in this embodiment of this application.

The processing unit 810 is further configured to perform switching from the second uplink BWP to the first uplink BWP.

Specifically, after determining that the sending of the uplink control information is completed, the processing unit 810 switches from the second uplink BWP to the first uplink BWP.

It should be noted that after determining that the sending of the uplink control information is completed, the processing unit 810 may alternatively not perform switching, and directly send, for example, data information, on another resource other than the first uplink control channel resource in the second uplink BWP.

In a possible implementation, the switching may be autonomously initiated by the processing unit 810 according to a second rule. The second rule is predefined in a protocol. The second rule is specifically that the terminal device switches from the second uplink BWP to the first uplink BWP when determining that the sending of the uplink control information is completed.

In a possible implementation, the network device may send second indication information to the terminal device to indicate the terminal device to perform the switching. The second indication information indicates the terminal device to switch, when the terminal device determines that the sending of the uplink control information is completed, from the second uplink BWP to the first uplink BWP.

In another possible implementation, the switching may be switching triggered by a timer. The timer is started after the switching is completed in step S240. After time of the timer reaches predetermined duration, the processing unit 810 switches from the second uplink BWP to the first uplink BWP based on the triggering of the timer. The predetermined duration of the timer may be default duration for completing the sending of the uplink control information, or may be configured by the network device by using signaling.

Specifically, the switching may be switching performed by the processing unit 810 based on the BWP IDs in the first configuration information.

It should be noted that the first uplink BWP in the switching in step S250 may be an original active BWP in which the terminal device performs the switching in S240, or may be any first uplink BWP configured by the network device.

It should be noted that, as described in step S240, the switching may have a plurality of names, and details are not described herein again.

Optionally, when the processing unit 810 determines that the uplink control information needs to be transmitted and the currently-working active BWP is the first uplink BWP, the processing unit 810 may further determine whether there is uplink physical shared channel transmission on the currently-working active first uplink BWP at a moment when uplink control needs to be sent. If there is the uplink physical shared channel transmission on the currently-working active first uplink BWP, the terminal device may transmit the uplink control information through the uplink physical shared channel transmission. If there is no uplink physical shared channel transmission, the BWP switching is performed.

It should be noted that, that there is the first uplink control channel resource in a frequency range of the first uplink BWP and the activation status of the first uplink control channel resource is inactive is equivalent to that there is no first uplink control channel resource in the frequency range of the first uplink BWP, and a time-frequency resource of the inactive first uplink control channel resource may be used for transmission, such as data transmission, other than uplink control information transmission. The active state or the inactive state may also be referred to as valid or invalid, or the like. Correspondingly, they all indicate that the first uplink control channel resource can be used to send uplink control information or cannot be used to send uplink control information. FIG. 9 is a schematic block diagram of a communication apparatus 900 according to an embodiment of this application. The communication apparatus 900 is configured to perform the foregoing methods or steps corresponding to the network device. Optionally, each unit in the communication apparatus 900 may be implemented by using software. The corresponding network device in the method 200 is used as an example for description. Steps performed by the network device in the method 300 and the method 400 are similar to the steps performed by the network device in the method 200, and details are not described herein again. As shown in FIG. 9, the communication apparatus 900 includes:
a transceiver unit 920, configured to send first configuration information, and further configured to send first indication information and various dynamic signaling; and
a processing unit 910, configured to determine the first configuration information, where the first configuration information includes at least one first uplink BWP and at least one second uplink BWP, there is no first uplink control channel resource in the first uplink BWP, there is a first uplink control channel resource in the second uplink BWP, and the first uplink BWP and the second uplink BWP are on a same uplink carrier.

It should be noted that the first uplink BWP and the second uplink BWP are shown in FIG. 5. FIG. 5 is a schematic diagram of the first uplink BWP and the second uplink BWP. Specifically, each BWP in the at least one first uplink BWP and the at least one second uplink BWP has a different BWP ID. In other words, both the at least one first uplink BWP and the at least one second uplink BWP meet a condition that is for distinguishing between different BWPs and that is defined in a conventional technology. In a preferred manner, a frequency range of the at least one first uplink BWP is different from a frequency range of the at least one second uplink BWP, and that the frequency ranges are different includes that center frequency positions and/or bandwidth sizes of the BWPs are different.

It should be noted that, in a preferred implementation, the second uplink BWP may be configured on either of two sides of the uplink carrier, in other words, the first uplink control channel resource is located on either of the two sides of the uplink carrier, so that a resource fragmentation problem caused when the first uplink control channel resource is distributed in the middle of but not on either of two sides of a carrier frequency resource is resolved, resource allocation flexibility and network resource utilization are improved, and transmission efficiency of a terminal device is improved.

It should be noted that the uplink BWP includes an initial uplink BWP and a user-dedicated uplink BWP. The uplink control channel resource includes a common uplink control channel resource and a user-dedicated uplink control channel resource. In an implementation, if the uplink BWP is an initial uplink BWP, the uplink control channel resource is a common uplink control channel resource. If the uplink BWP is a user-dedicated uplink BWP, the uplink control channel resource is a user-dedicated uplink control channel resource.

In a possible implementation, that there is no first uplink control channel resource in the first uplink BWP specifically represents that there is no first uplink control channel resource in the frequency range of the first uplink BWP; and that there is a first uplink control channel resource in the second uplink BWP specifically represents that there is the first uplink control channel resource in the frequency range of the second uplink BWP.

In another possible implementation, the processing unit 910 further configures an activation status of the first uplink control channel resource; that there is no first uplink control channel resource in the first uplink BWP specifically represents that there is no first uplink control channel resource in a frequency range of the first uplink BWP, or there is the first uplink control channel resource in a frequency range of the first uplink BWP and the first uplink control channel resource is in an inactive state; and that there is a first uplink control channel resource in the second uplink BWP specifically represents that there is the first uplink control channel resource in a frequency range of the second uplink BWP, and an activation status of the first uplink control channel resource is an active state.

Specifically, the processing unit 910 configures the activation status of the first uplink control channel resource in an initial configuration phase, where the activation status is active or inactive. Specifically, in a working process of the terminal device, the transceiver unit 920 may dynamically change the activation status of the first uplink control channel resource, and a change to the activation status of the first uplink control channel resource may be dynamically configured by using one piece of network signaling.

It should be noted that, that there is the first uplink control channel resource in a frequency range of the first uplink BWP and the activation status of the first uplink control channel resource is inactive is equivalent to that there is no first uplink control channel resource in the frequency range of the first uplink BWP, and a time-frequency resource of the inactive first uplink control channel resource may be used for transmission, such as data transmission, other than uplink control information transmission. The active state or the inactive state may also be referred to as valid or invalid, or the like. Correspondingly, they all indicate that the first uplink control channel resource can be used to send uplink control information or cannot be used to send uplink control information. The processing unit 910 may pre-configure an activation status of a first uplink control channel resource in a plurality of BWPs, and dynamically change the activation status of the at least one first uplink control channel resource in the plurality of BWPs by using signaling, so that the first uplink control channel resource is configured more flexibly, thereby reducing resource overheads. The transceiver unit 910 is further configured to send the first indication information and second indication information.

The first indication information indicates the terminal device to switch, when the terminal device needs to send the uplink control information, from the currently-working first uplink BWP to the second uplink BWP, and further send the uplink control information on the first uplink control channel resource of the second uplink BWP.

The second indication information indicates the terminal device to switch, when the terminal device determines that the sending of the uplink control information is completed, from the second uplink BWP to the first uplink BWP.

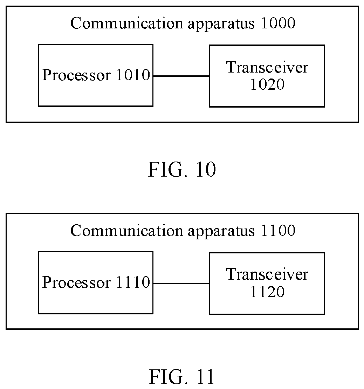

FIG. 10 is a schematic block diagram of a communication apparatus 1000 according to an embodiment of this application. The communication apparatus 1000 is configured to perform the foregoing methods or steps corresponding to the terminal device. Optionally, each unit in the communication apparatus 1000 may be implemented by using software. The corresponding terminal device in the method 200 is used as an example for description. Steps performed by the terminal device in the method 400 and the method 600 are similar to the steps performed by the terminal device in the method 200, and details are not described herein again. As shown in FIG. 10, the communication apparatus 1000 includes:
a transceiver 1020, configured to receive first configuration information; and
a processor 1010, configured to determine the first configuration information, where the first configuration information includes at least one first uplink BWP and at least one second uplink BWP, there is no first uplink control channel resource in the first uplink BWP, there is a first uplink control channel resource in the second uplink BWP, and the first uplink BWP and the second uplink BWP are on a same uplink carrier.

Optionally, the communication apparatus 1000 further includes a memory. It should be noted that the first uplink BWP and the second uplink BWP are shown in FIG. 3. Specifically, each BWP in the at least one first uplink BWP and the at least one second uplink BWP has a different BWP ID. In other words, both the at least one first uplink BWP and the at least one second uplink BWP meet a condition that is for distinguishing between different BWPs and that is defined in a conventional technology. In a preferred manner, a frequency range of the at least one first uplink BWP is different from a frequency range of the at least one second uplink BWP, and that the frequency ranges are different includes that center frequency positions and/or bandwidth sizes of the BWPs are different.

It should be noted that, in a preferred implementation, a network device may configure the second uplink BWP on either of two sides of the uplink carrier, in other words, the first uplink control channel resource is located on either of the two sides of the uplink carrier, so that a resource fragmentation problem caused when the first uplink control channel resource is distributed in the middle of but not on either of two sides of a carrier frequency resource is resolved, resource allocation flexibility and network resource utilization are improved, and transmission efficiency of the terminal device is improved.

It should be noted that the uplink BWP includes an initial uplink BWP and a user-dedicated uplink BWP. The uplink control channel resource includes a common uplink control channel resource and a user-dedicated uplink control channel resource. In an implementation, if the uplink BWP is an initial uplink BWP, the uplink control channel resource is a common uplink control channel resource. If the uplink BWP is a user-dedicated uplink BWP, the uplink control channel resource is a user-dedicated uplink control channel resource.

In a possible implementation, that there is no first uplink control channel resource in the first uplink BWP specifically represents that there is no first uplink control channel resource in the frequency range of the first uplink BWP; and that there is a first uplink control channel resource in the second uplink BWP specifically represents that there is the first uplink control channel resource in the frequency range of the second uplink BWP.

In another possible implementation, the network device further configures an activation status of the first uplink control channel resource; that there is no first uplink control channel resource in the first uplink BWP specifically represents that there is no first uplink control channel resource in a frequency range of the first uplink BWP, or there is the first uplink control channel resource in a frequency range of the first uplink BWP and the first uplink control channel resource is in an inactive state; and that there is a first uplink control channel resource in the second uplink BWP specifically represents that there is the first uplink control channel resource in a frequency range of the second uplink BWP, and an activation status of the first uplink control channel resource is an active state.

Specifically, the processor 1010 is further configured to determine that the network device configures the activation status of the first uplink control channel resource in an initial configuration phase, where the activation status is active or inactive.

Specifically, in a working process of the terminal device, the network device may dynamically change the activation status of the first uplink control channel resource, and a change to the activation status of the first uplink control channel resource may be dynamically configured by using one piece of network signaling. The transceiver 1020 is further configured to receive the network signaling.

The processor 1010 is further configured to determine a currently-working active BWP.

Specifically, before the processor 1010 determines that the currently-working active BWP is the first uplink BWP, the processor 1010 needs to determine whether the currently-working active BWP is the first uplink BWP or the second uplink BWP. If the processor 1010 determines that the currently-working active BWP is the first uplink BWP, a next step S240 in the method 200 is performed. If determining that the currently-working active BWP is the second uplink BWP, the processor 1010 determines that when uplink control information needs to be sent, the uplink control information may be sent on the first uplink control channel resource in the currently-working active BWP. The uplink control information is sent by the transceiver 1020.

It should be noted that the network device may configure a plurality of BWPs. As described above, in this embodiment of this application, the plurality of BWPs include at least one first uplink BWP and at least one second uplink BWP. The network device indicates, by using signaling, that one of the BWPs is a currently-working active BWP of the terminal device. The terminal can send and receive data or control information only in the active BWP. In other words, the terminal device can work only in one BWP at a same time point, and the BWP is an active BWP of the terminal device at the time point. It should be noted that a meaning represented by "active" in the active BWP is different from that represented by "active" in "the first uplink control channel resource in the BWP is in the active state" described above. In other words, an active state of the BWP is independent of the active state of the first uplink control resource in the BWP.

The processor 1010 is further configured to perform switching, by the terminal device, from the first uplink BWP to the second uplink BWP.

The transceiver 1020 is further configured to send the uplink control information.

Specifically, before the switching, the processor 1010 determines that the uplink control information needs to be sent.

In a possible implementation, the switching may be autonomously initiated by the processor 1010 according to a first rule. The first rule is predefined in a protocol. The first rule is specifically that when the terminal device needs to send the uplink control information, the terminal device switches from the currently-working first uplink BWP to the second uplink BWP, and further sends the uplink control information on the first uplink control channel resource of the second uplink BWP.

It should be noted that, for the foregoing descriptions, the processor 1010 autonomously initiates the switching according to the first rule. When the network device configures a plurality of second uplink BWPs, the network device uses signaling to pre-configure that the first uplink BWP is associated with one of the plurality of second uplink BWPs. The signaling may include SIB 1 signaling, RRC signaling, a MAC CE, DCI, and the like. The transceiver unit 810 is further configured to receive the network signaling, and when performing BWP switching according to the first rule, the processor 1010 switches to the associated second uplink BWP based on pre-configuration information.

In a possible implementation, the network device may send first indication information to the terminal device to indicate the terminal device to perform the switching. The transceiver unit 810 is further configured to receive the indication information. The first indication information indicates the terminal device to switch, when the terminal device needs to send the uplink control information, from the currently-working first uplink BWP to the second uplink BWP, and further send the uplink control information on the first uplink control channel resource of the second uplink BWP.

It should be noted that for the foregoing two possible implementations, when the network device configures a plurality of second uplink BWPs, the foregoing two possible implementations respectively have two specific implementations. Implementation 1: The network device pre-configures, by using signaling, that the first uplink BWP is associated with one of the plurality of second uplink BWPs. The signaling may include SIB1 signaling, RRC signaling, MAC CE signaling, DCI, and the like. The first indication information is used only to trigger the terminal device to switch from the first uplink BWP to the pre-configured associated second uplink BWP. Implementation 2: The network device does not pre-configure, by using signaling, that the first uplink BWP is associated with one of the plurality of second uplink BWPs. When triggering the terminal device to perform BWP switching, the first indication information further indicates an ID of a BWP in which the first uplink control channel resource for the terminal device to perform sending is located.

It should be noted that the transceiver 1020 may alternatively send, for example, data information on another resource other than the first uplink control channel resource in the second uplink BWP. Specifically, the switching may be switching performed by the processing unit 820 based on the BWP IDs in the first configuration information.

It should be noted that, that the processing unit 820 switches from the first uplink BWP to the second uplink BWP represents that the active BWP of the terminal device changes from the first uplink BWP to the second uplink BWP, that is, the BWP switching is performed. This process may also be referred to as BWP frequency hopping, BWP sliding, BWP retuning, radio frequency retuning, or the like. The foregoing names are equivalent. This is not limited in this embodiment of this application.

The processor 1010 is further configured to perform switching from the second uplink BWP to the first uplink BWP.

Specifically, after determining that the sending of the uplink control information is completed, the processor 1010 switches from the second uplink BWP to the first uplink BWP.

It should be noted that after determining that the sending of the uplink control information is completed, the processor 1010 may alternatively not perform switching, and directly send, for example, data information, on another resource other than the first uplink control channel resource in the second uplink BWP.

In a possible implementation, the switching may be autonomously initiated by the processor 1010 according to a second rule. The second rule is predefined in a protocol. The second rule is specifically that the terminal device switches from the second uplink BWP to the first uplink BWP when determining that the sending of the uplink control information is completed.

In a possible implementation, the network device may send second indication information to the terminal device to indicate the terminal device to perform the switching. The second indication information indicates the terminal device to switch, when the terminal device determines that the sending of the uplink control information is completed, from the second uplink BWP to the first uplink BWP.

In another possible implementation, the switching may be switching triggered by a timer. The timer is started after the switching is completed in step S240. After time of the timer reaches predetermined duration, the processor 1010 switches from the second uplink BWP to the first uplink BWP based on the triggering of the timer. The predetermined duration of the timer may be default duration for completing the sending of the uplink control information, or may be configured by the network device by using signaling.

Specifically, the switching may be switching performed by the processor 1010 based on the BWP IDs in the first configuration information.

It should be noted that the first uplink BWP in the switching in step S250 may be an original active BWP in which the terminal device performs the switching in S240, or may be any first uplink BWP configured by the network device.

It should be noted that, as described in step S240, the switching may have a plurality of names, and details are not described herein again.

Optionally, when the processor 1010 determines that the uplink control information needs to be transmitted and the currently-working active BWP is the first uplink BWP, the processor 1010 may further determine whether there is uplink physical shared channel transmission on the currently-working active first uplink BWP at a moment when uplink control needs to be sent. If there is the uplink physical shared channel transmission on the currently-working active first uplink BWP, the terminal device may transmit the uplink control information through the uplink physical shared channel transmission. If there is no uplink physical shared channel transmission, the BWP switching is performed.

It should be noted that, that there is the first uplink control channel resource in a frequency range of the first uplink BWP and the activation status of the first uplink control channel resource is inactive is equivalent to that there is no first uplink control channel resource in the frequency range of the first uplink BWP, and a time-frequency resource of the inactive first uplink control channel resource may be used for transmission, such as data transmission, other than uplink control information transmission. The active state or the inactive state may also be referred to as valid or invalid, or the like. Correspondingly, they all indicate that the first uplink control channel resource can be used to send uplink control information or cannot be used to send uplink control information. FIG. 11 is a schematic block diagram of a communication apparatus 1100 according to an embodiment of this application. The communication apparatus 900 is configured to perform the foregoing methods or steps corresponding to the network device. Optionally, each unit in the communication apparatus 1100 may be implemented by using software. The corresponding network device in the method 200 is used as an example for description. Steps performed by the network device in the method 300 and the method 400 are similar to the steps performed by the network device in the method 200, and details are not described herein again. As shown in FIG. 11, the communication apparatus 1100 includes:
a transceiver 1120, configured to send first configuration information, and further configured to send first indication information and various dynamic signaling; and
a processor 1110, configured to determine the first configuration information, where the first configuration information includes at least one first uplink BWP and at least one second uplink BWP, there is no first uplink control channel resource in the first uplink BWP, there is a first uplink control channel resource in the second uplink BWP, and the first uplink BWP and the second uplink BWP are on a same uplink carrier.

Optionally, the communication apparatus 1100 further includes a memory. It should be noted that the first uplink BWP and the second uplink BWP are shown in FIG. 5. FIG. 5 is a schematic diagram of the first uplink BWP and the second uplink BWP. Specifically, each BWP in the at least one first uplink BWP and the at least one second uplink BWP has a different BWP ID. In other words, both the at least one first uplink BWP and the at least one second uplink BWP meet a condition that is for distinguishing between different BWPs and that is defined in a conventional technology. In a preferred manner, a frequency range of the at least one first uplink BWP is different from a frequency range of the at least one second uplink BWP, and that the frequency ranges are different includes that center frequency positions and/or bandwidth sizes of the BWPs are different.

It should be noted that, in a preferred implementation, the second uplink BWP may be configured on either of two sides of the uplink carrier, in other words, the first uplink control channel resource is located on either of the two sides of the uplink carrier, so that a resource fragmentation problem caused when the first uplink control channel resource is distributed in the middle of but not on either of two sides of a carrier frequency resource is resolved, resource allocation flexibility and network resource utilization are improved, and transmission efficiency of a terminal device is improved.

It should be noted that the uplink BWP includes an initial uplink BWP and a user-dedicated uplink BWP. The uplink control channel resource includes a common uplink control channel resource and a user-dedicated uplink control channel resource. In an implementation, if the uplink BWP is an initial uplink BWP, the uplink control channel resource is a common uplink control channel resource. If the uplink BWP is a user-dedicated uplink BWP, the uplink control channel resource is a user-dedicated uplink control channel resource.

In a possible implementation, that there is no first uplink control channel resource in the first uplink BWP specifically represents that there is no first uplink control channel resource in the frequency range of the first uplink BWP; and that there is a first uplink control channel resource in the second uplink BWP specifically represents that there is the first uplink control channel resource in the frequency range of the second uplink BWP.

In another possible implementation, the processor 1110 further configures an activation status of the first uplink control channel resource; that there is no first uplink control channel resource in the first uplink BWP specifically represents that there is no first uplink control channel resource in a frequency range of the first uplink BWP, or there is the first uplink control channel resource in a frequency range of the first uplink BWP and the first uplink control channel resource is in an inactive state; and that there is a first uplink control channel resource in the second uplink BWP specifically represents that there is the first uplink control channel resource in a frequency range of the second uplink BWP, and an activation status of the first uplink control channel resource is an active state.

Specifically, the processor 1110 configures the activation status of the first uplink control channel resource in an initial configuration phase, where the activation status is active or inactive.

Specifically, in a working process of the terminal device, the transceiver 1120 may dynamically change the activation status of the first uplink control channel resource, and a change to the activation status of the first uplink control channel resource may be dynamically configured by using one piece of network signaling.

It should be noted that, that there is the first uplink control channel resource in a frequency range of the first uplink BWP and the activation status of the first uplink control channel resource is inactive is equivalent to that there is no first uplink control channel resource in the frequency range of the first uplink BWP, and a time-frequency resource of the inactive first uplink control channel resource may be used for transmission, such as data transmission, other than uplink control information transmission. The active state or the inactive state may also be referred to as valid or invalid, or the like. Correspondingly, they all indicate that the first uplink control channel resource can be used to send uplink control information or cannot be used to send uplink control information. The processor 1110 may pre-configure an activation status of a first uplink control channel resource in a plurality of BWPs, and dynamically change the activation status of the at least one first uplink control channel resource in the plurality of BWPs by using signaling, so that the first uplink control channel resource is configured more flexibly, thereby reducing resource overheads. The transceiver unit is further configured to send the first indication information and second indication information.

The first indication information indicates the terminal device to switch, when the terminal device needs to send the uplink control information, from the currently-working first uplink BWP to the second uplink BWP, and further send the uplink control information on the first uplink control channel resource of the second uplink BWP.

The second indication information indicates the terminal device to switch, when the terminal device determines that the sending of the uplink control information is completed, from the second uplink BWP to the first uplink BWP.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical, a mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first configuration information from a network device, wherein the first configuration information is used to configure a first uplink BWP and a second uplink BWP, there is no first uplink control channel resource in the first uplink BWP, there is a first uplink control channel resource in the second uplink BWP, and the first uplink BWP and the second uplink BWP are on a same uplink carrier; and
determining the first uplink BWP and the second uplink BWP based on the first configuration information.

2. The method according to claim 1, wherein the method further comprises:
determining that the first uplink BWP is an active BWP; and
switching from the first uplink BWP to the second uplink BWP, and sending uplink control information on the first uplink control channel resource of the second uplink BWP.

3. The method according to claim 2, wherein the method further comprises:
switching from the second uplink BWP to the first uplink BWP.

4. The method according to claim 2 or 3, wherein the method further comprises:
determining, according to a first rule or based on first indication information, to switch from the first uplink BWP to the second uplink BWP, wherein the first rule or the first indication information indicates to switch from the first uplink BWP to the second uplink BWP when it is determined that the uplink control information needs to be sent, wherein
the first rule is predefined, and the first indication information is from the network device; and
determining, according to a second rule or based on second indication information, to switch from the second uplink BWP to the first uplink BWP, wherein the second rule or the second indication information indicates to switch from the second uplink BWP to the first uplink BWP when it is determined that the sending of the uplink control information is completed, wherein
the second rule is predefined, and the second indication information is from the network device.

5. The method according to claim 4, wherein the first indication information and the second indication information are a same message.

6. The method according to any one of claims 1 to 5, wherein
that there is no first uplink control channel resource in the first uplink BWP comprises:
there is no first uplink control channel resource in a frequency range of the first uplink BWP; or
there is the first uplink control channel resource in a frequency range of the first uplink BWP, and the first uplink control channel resource is not activated; and
that there is a first uplink control channel resource in the second uplink BWP comprises:
there is the first uplink control channel resource in a frequency range of the second uplink BWP; or
there is the first uplink control channel resource in a frequency range of the second uplink BWP, and the first uplink control channel resource is already activated.

7. The method according to any one of claims 1 to 5, wherein the second uplink BWP is located on either of two sides of bandwidth of the uplink carrier.

8. A communication method, comprising:
determining first configuration information; and
sending the first configuration information to a terminal device, wherein the first configuration information is used to configure a first uplink BWP and a second uplink BWP, there is no first uplink control channel resource in the first uplink BWP, there is a first uplink control channel resource in the second uplink BWP, and the first uplink BWP and the second uplink BWP are on a same uplink carrier.

9. The method according to claim 8, wherein the method further comprises:
sending first indication information to the terminal device, wherein the first indication information indicates to switch from the first uplink BWP to the second uplink BWP when the terminal device determines that uplink control information needs to be sent.

10. The method according to claim 9, wherein the method further comprises:
sending second indication information to the terminal device, wherein the second indication information indicates to switch from the second uplink BWP to the first uplink BWP when the terminal device determines that the sending of the uplink control information is completed.

11. The method according to claim 8 or 9, wherein the first indication information and the second indication information are a same message.

12. The method according to any one of claims 8 to 11, wherein
that there is no first uplink control channel resource in the first uplink BWP comprises:
there is no first uplink control channel resource in a frequency range of the first uplink BWP; or
there is the first uplink control channel resource in a frequency range of the first uplink BWP, and the first uplink control channel resource is not activated; and
that there is a first uplink control channel resource in the second uplink BWP comprises:
there is the first uplink control channel resource in a frequency range of the second uplink BWP; or
there is the first uplink control channel resource in a frequency range of the second uplink BWP, and the first uplink control channel resource is already activated.

13. The method according to any one of claims 8 to 11, wherein the second uplink BWP is located on either of two sides of bandwidth of the uplink carrier.

14. A communication apparatus, comprising:
a transceiver unit, configured to receive first configuration information; and
a processing unit, configured to determine a first uplink BWP and a second uplink BWP based on the first configuration information, wherein there is no first uplink control channel resource in the first uplink BWP, there is a first uplink control channel resource in the second uplink BWP, and the first uplink BWP and the second uplink BWP are on a same uplink carrier.

15. The apparatus according to claim 14, wherein the processing unit is further configured to:
determine that the first uplink BWP is an active BWP; and
switch from the first uplink BWP to the second uplink BWP, and send uplink control information on the first uplink control channel resource of the second uplink BWP.

16. The apparatus according to claim 15, wherein the processing unit is further configured to:
switch from the second uplink BWP to the first uplink BWP.

17. The apparatus according to claim 14 or 15, wherein the processing unit is further configured to:
determine, according to a first rule or based on first indication information, to switch from the first uplink BWP to the second uplink BWP, wherein the first rule or the first indication information indicates to switch from the first uplink BWP to the second uplink BWP when it is determined that the uplink control information needs to be sent, wherein
the first rule is predefined, and the first indication information is from the network device; and
determine, according to a second rule or based on second indication information, to switch from the second uplink BWP to the first uplink BWP, wherein the second rule or the second indication information indicates to switch from the second uplink BWP to the first uplink BWP when it is determined that the sending of the uplink control information is completed, wherein
the second rule is predefined, and the second indication information is from the network device; and
the transceiver unit is further configured to receive the first indication information and the second indication information.

18. The apparatus according to claim 17, wherein the first indication information and the second indication information that are received by the transceiver unit are a same message.

19. The apparatus according to any one of claims 14 to 17, wherein that there is no first uplink control channel resource in the first uplink BWP determined by the processing unit comprises:
there is no first uplink control channel resource in a frequency range of the first uplink BWP; or
there is the first uplink control channel resource in a frequency range of the first uplink BWP, and the first uplink control channel resource is not activated; and
that there is a first uplink control channel resource in the second uplink BWP determined by the processing unit comprises:
there is the first uplink control channel resource in a frequency range of the second uplink BWP; or
there is the first uplink control channel resource in a frequency range of the second uplink BWP, and the first uplink control channel resource is already activated.

20. The apparatus according to any one of claims 14 to 17, wherein the second uplink BWP determined by the processing unit is located on either of two sides of bandwidth of the uplink carrier.

21. A communication apparatus, comprising:
a processing unit, configured to determine first configuration information, wherein the first configuration information is used to configure a first uplink BWP and a second uplink BWP, there is no first uplink control channel resource in the first uplink BWP, there is a first uplink control channel resource in the second uplink BWP, and the first uplink BWP and the second uplink BWP are on a same uplink carrier; and
a transceiver unit, configured to send the first configuration information to a terminal device.

22. The apparatus according to claim 21, wherein the transceiver unit is further configured to:
send first indication information to the terminal device, wherein the first indication information indicates to switch from the first uplink BWP to the second uplink BWP when the terminal device determines that uplink control information needs to be sent.

23. The apparatus according to claim 22, wherein the transceiver unit is further configured to:
send second indication information to the terminal device, wherein the second indication information indicates to switch from the second uplink BWP to the first uplink BWP when the terminal device determines that the sending of the uplink control information is completed.

24. The apparatus according to claim 22 or 23, wherein the first indication information and the second indication information that are sent by the transceiver unit are a same message.

25. The apparatus according to any one of claims 21 to 24, wherein that there is no first uplink control channel resource in the first uplink BWP determined by the processing unit comprises:
there is no first uplink control channel resource in a frequency range of the first uplink BWP; or
there is the first uplink control channel resource in a frequency range of the first uplink BWP, and the first uplink control channel resource is not activated; and
that there is a first uplink control channel resource in the second uplink BWP determined by the processing unit comprises:
there is the first uplink control channel resource in a frequency range of the second uplink BWP; or
there is the first uplink control channel resource in a frequency range of the second uplink BWP, and the first uplink control channel resource is already activated.

26. The apparatus according to any one of claims 21 to 24, wherein the second uplink BWP determined by the processing unit is located on either of two sides of bandwidth of the uplink carrier.

27. A computer-readable storage medium, wherein the computer-readable storage medium stores computer instructions, and when the computer instructions are run on a computer, the computer is enabled to perform the communication method according to any one of claims 1 to 13.
